# DEMANDE DE BREVET EUROPEEN

(11) **EP 0 706 862 A1**
(43) Date de publication de la demande: **17.04.1996**
(21) Numéro de dépôt: 95810638.7
(22) Date de dépôt: 12.10.1995
(51) Int. Cl.: B25J 15/00, B65G 47/90, B25J 19/02

(54) **Dispositif de préhension pour pièces de petit volume et procédé utilisant ledit dispositif**

(30) Priorité: 12.10.1994 CH 3061/94
(71) Demandeur: CSEM, Centre Suisse d'Electronique et de Microtechnique S.A., CH-2007 Neuchâtel (CH)
(72) Inventeur: Depeursinge, Yves, CH-1077 Servion (CH); Hoehener, Rémy, CH-2000 Neuchâtel (CH); Genequand, Pierre-Marcel, CH-1209 Genève (CH); Clauss, Daniel, CH-2034 Peseux (CH)
(74) Mandataire: Brulliard, Joel

(57) **Abrégé**

La présente invention concerne les dispositifs de préhension/manipulation de petites pièces.

Une tête de saisie 8, munie de surface de contact 10, est pourvue de moyens de chauffage 9. Cette tête est, selon l'invention, couplée à des moyens de refroidissement 5 adaptés à maintenir la température de la tête à une température inférieure au point de gélification d'un liquide, lequel est amené au voisinage de la tête via une conduite 7. Les moyens de chauffage sont rendus actifs lorsque la pièce doit être décollée de la tête.

le dispositif de l'invention s'applique aux robots d'assemblage d'objets de petit volume.

## Description

La présente invention se rapporte aux manipulateurs de petits objets, en général, et concerne, plus particulièrement, un dispositif de préhension, destiné à équiper un bras manipulateur de robot et permettant la saisie et/ou l'assemblage de pièces de petit volume, ainsi qu'un procédé pour la manipulation de ces pièces à l'aide dudit dispositif.

Parmi les moyens connus utilisés pour la saisie et la manipulation de petits objets ou pièces, on peut citer les pinces (ou étaux) munies de deux becs (ou mâchoires) ou plus et maintenant les pièces par pincement, les pompes à vide qui crèent une différence de pression suffisante pour faire adhérer l'objet à une tête et les moyens de collage faisant appel, par exemple, à de la cire qui est refroidie après contact pour assurer l'adhérence. Le premier moyen cité est avantageusement utilisé avec des objets non déformables et dont la position aussi bien que la forme sont déterminées. Par contre, ce premier moyen s'applique mal lorsque les objets sont en une matière déformable, fragiles, de forme quelconque ou lorsqu'ils se présentent selon une position non définie. Le deuxième moyen mentionné implique que les objets à saisir offrent une surface suffisamment plane et suffisamment lisse pour qu'il n'y ait pas de fuite de pression entre la tête de saisie reliée à la pompe à vide et l'objet à saisir. Dans ce cas encore, il est nécessaire que les objets se présentent de façon déterminée, du moins, en ce qui concerne leur face plane. Le troisième moyen, quant à lui, est principalement utilisé pour la saisie et la manipulation d'objets légers et fragiles, tels que des composants optiques. Les inconvénients majeurs de ce troisième moyen sont: ses limitations d'application à la manipulation d'objets de taille moyenne (application difficile pour des objets de très petites dimensions), la lenteur du cycle chauffage-refroidissement et la nécessité de devoir éliminer les résidus de cire après manipulation.

Un but de la présente invention est un dispositif pour la saisie et/ou la manipulation de petits objets ne présentant pas les inconvénients mentionnés ci-dessus.

Un autre but de l'invention est un dispositif pour la saisie et/ou la manipulation de petits objets pouvant équiper le bras d'un robot manipulateur.

Un autre but de l'invention est un dispositif pour la saisie et/ou la manipulation de petits objets ayant une forme et une présentation quelconques et de matière quelconque.

Un autre but de l'invention est un dispositif pour la saisie et/ou la manipulation de petits objets pouvant opérer à une cadence élevée.

Encore un autre but de l'invention est un procédé permettant la manipulation de pièces fragiles de petit volume sans déformation de ces dernières.

Ces buts sont atteints grâce aux caractéristiques mentionnées dans les revendications.

De manière générale, l'invention fait appel à la technique de gélification. Cette technique est, en soi, connue mais son application, selon les modes de réalisation publiés, ne permettent pas d'envisager la saisie/manipulation de petits objets à cadence élevée du fait de la relativement grande durée du cycle refroidissement/chauffage. Au contraire, selon la présente invention, ce cycle peut être considérablement réduit du fait que la tête de saisie est constamment refroidie en-dessous du point de gélification et qu'il est prévu des moyens de chauffage pour amener, rapidement et localement, l'extrémité en contact avec l'objet à une température juste au-dessus de ce point de gélification lorsque ledit objet doit être relâché.

D'autres objets, caractéristiques et avantages de la présente invention apparaîtront plus clairement à la lecture de la description suivante d'exemples de réalisation particuliers, ladite description étant faite à titre purement illustratif et en relation avec les dessins joints dans lesquels:
- la figure 1 représente une vue en coupe d'une première variante de dispositif de préhension;
- la figure 2 montre, également en coupe, une deuxième variante de dispositif de préhension; et
- la figure 3 montre un schéma-bloc d'un système de régulation des éléments Peltier.

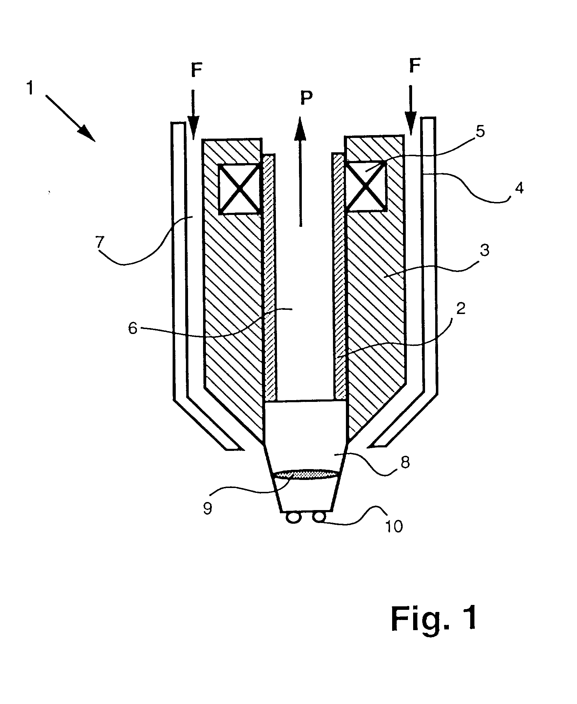

Le dispositif de la figure 1, qui porte la référence générale 1, comprend une tête de saisie proprement dite 8, réalisée dans un matériau thermiquement conducteur et un tube 2, également réalisé dans un matériau thermiquement conducteur, fixé sur ladite tête. Le tube 2 est refroidi au moyen d'éléments réfrigérants, tels par exemple des éléments 5 à effet Peltier montés sur sa périphérie. Le tube 2 et les éléments réfrigérants sont recouverts d'une couche isolante 3 et l'ensemble est disposé à l'intérieur d'un second tube 4 de telle manière qu'un espace libre 7 subsiste entre ledit second tube 4 et ladite couche isolante 3. La tête 8 porte un élément de chauffage 9, qui sera, par exemple, une résistance et disposé le plus près possible de l'extrémité de la tête. Cette dernière est encore munie de plots de contact 10, qui pourront être au nombre de trois et sont destinés à permettre au dispositif d'accommoder des objets de forme quelconque.

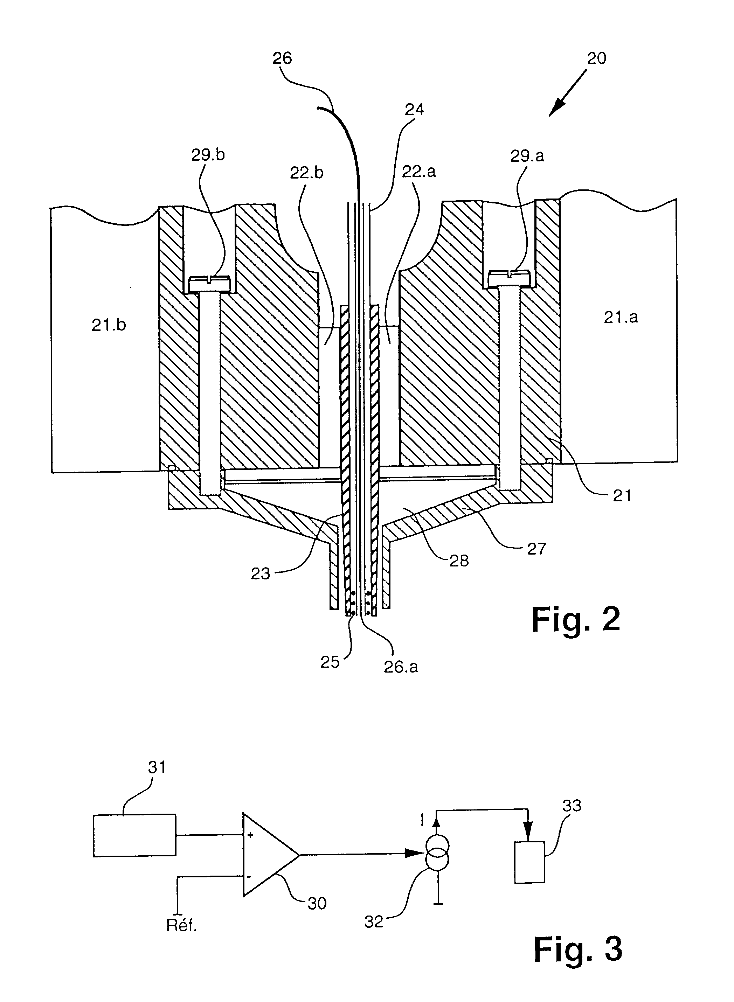

Le fonctionnement du dispositif peut être décrit de la manière suivante. Les éléments réfrigérants sont prévus de manière à assurer, en l'absence d'activation de l'élément de chauffage 9, une température de la tête 8 légèrement inférieure à la température de gélification du liquide de contact. Ce liquide de contact est amené à la tête 8 par le canal 7 sous l'action de la pression F; il pourra être de l'eau ou tout autre liquide ou solution à température de solidification relativement élevée, (zéro degré Celsius ou au-dessus), se présenter sous forme liquide ou en pulvérisation, etc. Bien entendu, l'amenée dudit liquide de contact n'est commandée qu'au moment de la saisie de l'objet à manipuler. Dès que l'objet est en contact avec la tête, le liquide de contact apparaît et la solidification de ce dernier entraîne la fixation de l'objet sur la tête. Après solidification, l'objet est solidaire de la tête 8 et le reste aussi longtemps que la température de cette dernière est maintenue à la température de solidification ou quelques degrés en-dessous de celle-ci. Pendant ce temps, il est donc possible de manipuler ou de déplacer l'objet en commandant le mouvement correspondant du dispositif pour, par exemple, réaliser un assemblage avec d'autres composants. Afin de s'affranchir de possibles variations de température de la tête dues au milieu environnant ou encore à la température de l'objet même, la commande desdits éléments réfrigérants sera avantageusement asservie à cesdites variations de température de la tête, (voir figure 3). La température de la tête peut être mesurée à l'aide d'un thermocouple (non représenté) disposé aussi près que possible de l'extrémité de la tête. La boucle d'asservissement consiste à comparer (comparateur 30) la température fournie par le thermocouple 31 à une température de référence (légèrement inférieure à la température de solidification) et à commander l'alimentation 32 des éléments Peltier 33 en fonction de cette comparaison. Il convient de noter que la résistance et le thermocouple peuvent être avantageusement remplacés par une thermistance qui assure la double fonction de thermomètre et d'élément de chauffage. La mesure de la température peut non seulement servir à la régulation des éléments Peltier mais également être utilisée pour détecter un détachement inopiné de la pièce. En effet, si la pièce est libérée de la tête pour quelque cause que ce soit, la température de cette dernière subit une variation brusque qui peut être détectée donnant lieu à une action corrective appropriée.

L'évacuation de la chaleur de la tête 8 vers la source de froid 5 peut se faire de plusieurs manières différentes. Parmi celles-ci, de par sa simplicité de mise en oeuvre et son efficacité, l'utilisation de "caloducs" (ou "heat pipes" selon la terminologie anglo-saxone) est particulièrement attractive. Ces caloducs sont des conduits fermés renfermant un liquide et utilisés pour "transporter" la chaleur depuis un point chaud jusqu'à un point froid du caloduc. Ils sont bien connus de l'homme de métier et utilisés, en particulier, dans le domaine de l'électronique. Dans le cas présent, l'une des extrémités du ou des caloducs sera couplée thermiquement aux éléments Peltier 5 (partie froide), tandis que l'autre extrémité sera thermiquement couplée à la tête à refroidir 8 (partie chaude). Les caloducs peuvent être utilisés en lieu et place du tube 2 de la figure 1.

D'autres méthodes de refroidissement, telles que la convection forcée de chaleur à l'aide d'une pompe à chaleur, peuvent aussi être utilisées. Ces méthodes, toutefois, impliquent un surcroît de complexité qui n'est pas compensé par le gain de rendement. Comme source de froid, d'autres solutions que celles basées sur l'effet Peltier peuvent être utilisées, tels les systèmes classiques à compresseur. Toutefois, les éléments à effet Peltier présentent l'avantage d'être compacts et facilement portables sur une tête de robot.

Selon une variante, qui sera expliquée plus en détail ci-après en relation avec le procédé de l'invention, il n'est pas prévu de canal 7 pour amener le liquide de contact car les pièces à saisir et/ou à manipuler, soit se trouvent dans une atmosphère suffisamment chargée d'humidité, soit ont été préalablement humidifiées. Dans ce cas, le dispositif de la figure 1 se trouve simplifié.

Selon une caractéristique de l'invention, le dispositif peut aussi comporter des moyens d'assistance à la libération. Selon un mode préféré, ces moyens consisteront en un flux d'air amené par le tube 4, dirigé vers la tête 8 et commandé en simultanéité avec lesdits moyens de chauffage. La pression exercée par le flux d'air sur la pièce tenue devra être suffisante pour "décoler" cette dernière. Un autre avantage résultant de l'utilisation d'un tel flux d'air est que celui-ci contribuera à débarrasser la tête 8 de tout résidu de glace pouvant subsister après libération de la pièce. Selon un autre mode de réalisation, les moyens d'assistance à la libération consisteront en un levier réalisé en un matériau bon conducteur thermique, connecté, par une extrémité, à la partie chaude des éléments Peltier et dont l'autre extrémité peut être mise en contact avec la tête 8 au moyen d'un actionneur. La réalisation d'un tel levier et son adaptation au dispositif de la figure 1 sont du domaine de l'homme de métier et, pour cette raison, le levier n'a pas été représenté sur ladite figure 1. Le fonctionnement du levier est le suivant: du fait de son contact avec la partie chaude des éléments Peltier, il est maintenu à une température relativement importante; lorsque son extrémité libre est mise en contact avec la tête, elle transfère à cette dernière une quantité de chaleur suffisante pour élever sa température au-dessus du point de fusion du liquide de contact et, ainsi, entraîner la libération de la pièce.

Le schéma de la figure 2 montre, en coupe partielle, une autre variante de dispositif de préhension selon l'invention particulièrement adapté à la manipulation de pièces de très petit volume. Le dispositif 20 comporte un corps 21 en un matériau thermiquement conducteur, (par exemple, en aluminium) qui est muni d'ailettes de refroidissement 21.a et 21.b. Dans ce corps 21, sont positionnés des éléments Peltier 22.a et 22.b, dont les faces chaudes sont en contact avec ledit corps 21 et dont les faces froides sont en contact thermique avec un tube 23 en un matériau très bon conducteur de la chaleur, tel le cuivre. Il convient de noter que, comme les éléments Peltier se trouvent généralement sous la forme de parallélipipèdes rectangles, il en sera de même pour le tube 23. A l'intérieur du tube 23, se trouve un autre tube 24 en un matériau isolant, tel une céramique. A l'extrémité inférieure de ce tube 24 et, si possible noyée dans la céramique, est disposée une bobine 25. Les fils d'alimentation (non représentés) de la bobine pourront avantageusement emprunter le conduit intérieur du tube 24 pour être connectés à leur source d'alimentation. Le dispositif 20 comporte encore un couvercle 27 qui est fixé au corps 21, par exemple par des vis 29.a et 29.b. L'espace libre en le corps 21 et le couvercle 27 est rempli par une mousse isolante 28. Selon une variante, également représentée, la bobine 25 est remplacée par une fibre optique 26, couplée à une source de lumière (non représentée), disposée à l'intérieur du tube 24 et dont l'extrémité, qui affleure l'extrémité inférieure du tube 24, a été revêtue d'une couche d'un matériau absorbant la lumière transmise par la fibre 26.

Le fonctionnement de ce dispositif 20 est analogue à celui du dispositif de la figure 1. Les éléments Peltier sont commandés de manière à porter l'extrémité inférieure du tube 23 (la tête proprement dite) à une température inférieure à la température de solidification du liquide de contact (voir ci-dessus) afin de permettre l'adhérence de la pièce sur la tête. La bobine 25, pour sa part, est alimentée pour élever la température de cette même tête au-dessus de cette température de solidification et, ainsi, supprimer ladite adhérence. Lorsque le dispositif 20 est équippé avec une fibre optique, c'est celle-ci qui est alimentée pour entraîner le "lâcher" de la pièce. En effet, lorsque la fibre optique est alimentée, la couche de matériau absorbant à son extrémité emmagasine de la chaleur, qui est transmise à l'extrémité de la tête. De préférence, on utilisera une lumière infrarouge pour un meilleur résultat.

Le procédé selon l'invention, permettant la saisie et/ou la manipulation des petites pièces comporte les étapes suivantes:
- humidifier lesdites pièces à l'aide d'un liquide de contact;
- amener la tête du dispositif de préhension en contact avec une pièce à saisir, ladite tête étant maintenue à une température inférieure à la température de gélification dudit liquide de contact;
- saisir ladite pièce par gélification dudit liquide de contact;
- déplacer le dispositif de préhension à l'endroit où ladite pièce doit être déposée;
- commander les éléments de chauffage de manière à porter au moins la surface de la tête en contact avec ladite pièce à une température supérieure à la température de liquéfaction dudit liquide de contact, libérant ainsi la pièce.

On se rappelera que le terme "humidifier" utilisé ci-dessus se réfère à une opération d'humidification ponctuelle, par exemple par le biais d'une pulvérisation, ou encore au fait de créer ou d'utiliser une atmosphère suffisamment chargée d'humidité. Par ailleurs, il peut s'avérer nécessaire de prévoir, juste avant la mise en contact de la pièce et de la tête, une étape de réchauffement de la tête afin d'éliminer toute trace de glace sur cette dernière. Cette étape supplémentaire sera nécessaire lorsqu'on désire opérer en atmosphère humide.

Selon une variante du procédé décrit ci-dessus, l'amenée de la tête vers la pièce à saisir est effectuée sous le contrôle d'une caméra fournissant un signal de proximité aux moyens de commande de déplacement de ladite tête. Un tel contrôle optique se révèle particulièrement intéressant lorsque les pièces à manipuler ne doivent pas être déformées.

Il est aisé de comprendre que le dispositif de l'invention offre, par rapport aux solutions de l'art antérieur, nombre d'avantages parmi lesquels: la facilité de réalisation et une grande fiabilité dues à l'absence de mécanisme, une adaptabilité à toute pièce de forme et de matière quelconques, une absence de pollution, une souplesse et une rapidité de fonctionnement, etc. En raison de ces avantages, le dispositif de la présente invention pourra avantageusement être appliqué dans les chaînes d'assemblage automatique de mini- ou micro-systèmes composés de pièces ou éléments de petit volume et de forme et nature aussi diverses que des "puces" de circuit intégré, des capteurs, des composants mécaniques, optiques et/ou électroniques, des boîtiers d'encapsulation, etc.

Bien que la présente invention ait été décrite dans le cadre d'un exemple de réalisation particulier, il est clair, cependant, qu'elle n'est pas limitée audit exemple et qu'elle est susceptible de variantes ou modifications sans sortir de son domaine

## Revendications

1. Dispositif de préhension pour la saisie et/ou la manipulation d'objets de petit volume comprenant une tête de saisie réalisée en un matériau thermiquement conducteur et présentant au moins une surface de contact avec les objets, caractérisé en ce qu'il comporte en outre:
- des moyens de refroidissement de ladite tête capables d'engendrer à l'interface entre la tête et ladite surface de contact de l'objet la gélification de l'humidité ambiante, causant ainsi la fixation de l'objet en contact avec la tête; et
- des moyens de chauffage de ladite tête capables de chauffer rapidement ladite surface de contact jusqu'à une température supérieure audit point de gélification pour entraîner la libération de l'objet.

2. Dispositif selon la revendication 1, caractérisé en ce qu'il comporte en outre des moyens pour amener, sur ladite surface de contact, un fluide ayant un point de gélification stable.

3. Dispositif selon la revendication 1 ou la revendication 2, caractérisé en ce que lesdits moyens de refroidissement sont actifs de manière permanente, alors que lesdits moyens de chauffage ne sont commandés que de manière intermittente.

4. Dispositif selon l'une des revendications 1 à 3, caractérisé en ce que lesdits moyens de refroidissement sont constitués par un premier tube en un matériau thermiquement conducteur couplé à ladite tête et par des moyens réfrigérants adaptés à refroidir ledit tube et/ou le milieu intérieur à celui-ci jusqu'à une température inférieure audit point de gélification.

5. Dispositif selon la revendication 4, caractérisé en ce que lesdits moyens de refroidissement sont constitués par des éléments à effet Peltier.

6. Dispositif selon la revendication 4, caractérisé en ce que lesdits moyens réfrigérants sont constitués par un circuit de refroidissement adapté à faire circuler, dans ledit premier tube, un fluide à une température inférieure audit point de gélification.

7. Dispositif selon la revendication 4, caractérisé en ce que ledit premier tube est un caloduc.

8. Dispositif selon la revendication 4, caractérisé en ce qu'il est prévu, en outre, une pompe à chaleur qui est couplée audit premier tube et assure l'élimination des calories engendrés par lesdits moyens de chauffage.

9. Dispositif selon la revendication 2, caractérisé en ce que lesdits moyens pour amener un fluide sont constitués par un second tube disposé autour dudit premier tube de telle manière qu'un conduit soit ménagé entre lesdits premier et second tubes et que la sortie dudit conduit soit proche de l'extrémité de ladite tête.

10. Dispositif selon la revendication 2 ou la revendication 9, caractérisé en ce que ledit fluide est de l'eau.

11. Dispositif selon la revendication 10, caractérisé en ce que ladite eau est pulvérisée.

12. Dispositif selon la revendication 1, caractérisé en ce que lesdits moyens de chauffage sont constitués par une résistance en contact thermique avec ladite tête et disposée au voisinage de ladite surface de contact et en ce qu'il est prévu un thermocouple dans la tête pour mesurer la température de la tête.

13. Dispositif selon la revendication 1, caractérisé en ce que lesdits moyens de chauffage sont constitués par une thermistance en contact thermique avec ladite tête et disposée au voisinage de ladite surface de contact, ladite thermistance servant d'élément de chauffage et pour la mesure de la température de la tête.

14. Dispositif selon la revendication 1, caractérisé en ce que lesdits moyens de chauffage sont constitués par une fibre optique, susceptible d'être alimentée par une source de lumière, terminée à son extrémité par une couche d'un matériau absorbant et disposée à l'intérieur de ladite tête de telle manière que l'extrémité revêtue affleure ladite surface de contact.

15. Dispositif selon la revendication 1, caractérisé en ce que ladite source de lumière est une source de lumière infrarouge.

16. Dispositif selon la revendication 1, caractérisé en ce qu'il est prévu des moyens d'assistance à la libération constitués par un générateur de flux d'air couplé audit conduit et commandé en simultanéité avec lesdits moyens de chauffage au moment de la libération de l'objet.

17. Dispositif selon la revendication 5, caractérisé en ce qu'il est prévu des moyens d'assistance à la libération constitués par un levier couplé thermiquement à la partie chaude des éléments Peltier et dont l'autre extrémité est susceptible d'être mise en contact avec la tête par un actionneur au moment de la libération de l'objet.

18. Procédé pour la manipulation d'objets de petits volume à l'aide d'un dispositif de préhension selon l'une des revendications 1 à 17, caractérisé en ce qu'il comprend les étapes consistant à:
- humidifier lesdits objets à l'aide d'un liquide de contact;
- amener la tête du dispositif de préhension en contact avec l'objet à saisir, ladite tête étant maintenue à une température inférieure à la température de gélification dudit liquide de contact;
- saisir ledit objet par gélification dudit liquide de contact;
- déplacer le dispositif de préhension à l'endroit où ledit objet doit être déposée;
- commander les éléments de chauffage de manière à porter au moins la surface de la tête en contact avec ledit objet à une température supérieure à la température de liquéfaction dudit liquide de contact, libérant ainsi ledit objet.

19. Procédé selon la revendication 18, caractérisé en ce qu'il comporte, avant la mise en contact de la tête et de l'objet, une étape de chauffage de la tête.
